# EUROPEAN PATENT APPLICATION

(11) **EP 4 733 834 A1**
(43) Date of publication of application: **29.04.2026**
(21) Application number: 24825007.8
(22) Date of filing: 29.04.2024
(51) Int. Cl.: G02F 1/015

(54) **PREPARATION METHOD AND STRUCTURE FOR DEVICE**

(30) Priority: 20.06.2023 CN 202310737309
(71) Applicant: Shanghai Institute of Microsystem and Information Technology, Chinese Academy of Sciences, Shanghai 200050 (CN)
(72) Inventor: YI, Ailun, Shanghai 200050 (CN); OU, Xin, Shanghai 200050 (CN); CAI, Jiachen, Shanghai 200050 (CN); WANG, Chengli, Shanghai 200050 (CN)
(74) Representative: De Arpe Tejero, Manuel
(86) International application number: PCT/CN2024/090569
(87) International publication number: WO 2024/260109

(57) **Abstract**

This application discloses a preparation method and a device structure. The method comprises : performing ion implantation on a first silicon carbide substrate to obtain a first bonding-ready structure; conducting a trimming process on a second silicon carbide substrate; bonding the first bonding-ready structure and the second silicon carbide substrate to obtain a first bonded structure; performing silicon carbide layer splitting based on the first bonded structure to obtain a silicon carbide epitaxial substrate; preparing a silicon carbide epitaxial layer on the silicon carbide epitaxial substrate to obtain a second bonding-ready structure; bonding the silicon carbide epitaxial layer of the second bonding-ready structure and a third silicon carbide substrate via a dielectric layer to obtain a second bonded structure; removing the silicon carbide epitaxial substrate from the second bonded structure to obtain a composite substrate; and preparing a modulation device structure in the etching-targeted region of the composite substrate to obtain the device. This application provides a solution for achieving efficient optical modulation of silicon carbide based on the mechanism of carrier dispersion.

## Description

### TECHNICAL FIELD

The present disclosure relates to the field of microelectronic devices, particularly to a preparation method for a device and a device structure.

### BACKGROUND

As a representative material in the third-generation semiconductors, silicon carbide (SiC) combines a multitude of excellent properties, including a wide bandgap, high physical strength, high thermal conductivity, high corrosion resistance, a high melting point, high second- and third-order optical nonlinear coefficients, a broad transmission window, and a wide-range defect-related luminescence window. Its high refractive index enables strong confinement of optical modes, offering greater flexibility in the field of dispersion. The wide bandgap minimizes optical absorption losses at high power levels, while the high second- and third-order nonlinearities make SiC outstanding in nonlinear optical applications. Additionally, its wide-range defect-related luminescence window renders it an ideal material for light sources. Consequently, SiC is an ideal material for integrated optics, nonlinear, and optomechanical devices.

The most commonly used silicon carbide materials comprise 3C-SiC, 4H-SiC, and 6H-SiC. 3C-SiC thin films are primarily prepared by atmospheric pressure chemical vapor deposition (APCVD) and reduced pressure chemical vapor deposition (RPCVD) on the surface of Si substrates. The 3C-SiC films prepared in this manner are mainly polycrystalline, and their crystal quality does not reach that of a single crystal. Furthermore, the growth temperatures of 4H- and 6H-SiC exceed the melting point of silicon, making it impossible to grow single-crystal SiC films on Si substrates using traditional thin-film deposition and epitaxy methods. On the other hand, the epitaxial growth of SiC films on SiC substrates leads to degraded performance of optical devices due to the absence of an intervening oxide layer for isolation. Therefore, numerous challenges exist in the growth of silicon carbide thin films for integrated optical applications.

### SUMMARY

In order to address the aforementioned technical challenges, this application provides a preparation method and a device structure. By doping the silicon carbide epitaxial layer and fabricating a modulation device structure within the doped region, an efficient optical modulation solution for silicon carbide in integrated optical systems can be achieved based on the mechanism of carrier dispersion.

In a first aspect, an embodiment of this application discloses a preparation method for a device, which comprises the following steps:
obtaining a first silicon carbide substrate, a second silicon carbide substrate, and a third silicon carbide substrate; wherein the third silicon carbide substrate has a dielectric layer;
performing ion implantation on the first silicon carbide substrate to form a defective layer inside the first silicon carbide substrate, thereby obtaining a first bonding-ready structure;
conducting a trimming process on the second silicon carbide substrate until the surface parameters of the second silicon carbide substrate meet predetermined conditions;
bonding the first bonding-ready structure and the second silicon carbide substrate to obtain a first bonded structure;
performing silicon carbide layer splitting and post-processing based on the first bonded structure to obtain a silicon carbide epitaxial substrate;
preparing a silicon carbide epitaxial layer on the silicon carbide epitaxial substrate to obtain a second bonding-ready structure;
bonding the silicon carbide epitaxial layer of the second bonding-ready structure and the third silicon carbide substrate via the dielectric layer to obtain a second bonded structure;
removing the silicon carbide epitaxial substrate from the second bonded structure to obtain a composite substrate; wherein the composite substrate has an etching-targeted region;
preparing a modulation device structure in the etching-targeted region to obtain the device.

Optionally, the first silicon carbide substrate is an N-type silicon carbide substrate. The types of ions injected during the ion implantation process on the first silicon carbide substrate comprise at least one of H and He. The dosage range for ion implantation into the first silicon carbide substrate is set between 1E15 cm⁻² and 1E18 cm⁻². The energy range for ion implantation into the first silicon carbide substrate is set between 20 keV and 2 MeV.

Optionally, the second silicon carbide substrate is at least one of a Dummy substrate, a mixed polytype substrate, or a polycrystalline substrate. The trimming process conducted on the second silicon carbide substrate comprises sequentially performing rough grinding, fine grinding, coarse polishing, low-energy ion beam irradiation trimming, and fine polishing.

Optionally, the thickness range of the silicon carbide epitaxial layer is between 400 nm and 1500 nm. The doping concentration range for the silicon carbide epitaxial layer grown on the silicon carbide epitaxial substrate is set between 1E13/cm³ and 1E15/cm³ . The doping elements for the silicon carbide epitaxial layer grown on the silicon carbide epitaxial substrate comprise at least one of N and P.

Optionally, the dielectric layer comprises at least one of SiO₂ , Al₂O₃ , or Si₃N₄ ; the preparation methods for the dielectric layer comprise at least one of thermal oxidation, chemical vapor deposition (CVD), or physical vapor deposition (PVD). The thickness range of the dielectric layer is between 1µm and 5µm.

Optionally, preparing a modulation device structure in the etching-targeted region to obtain the device comprises: doping silicon carbide and etching silicon carbide devices in the etching-targeted region to obtain doped regions; performing annealing activation treatment on the doped regions; and preparing metal electrodes on the doped regions and covering them with a device protective layer to obtain the device.

Optionally, the etching-targeted regions comprise a first etching-targeted region, a second etching-targeted region, and a third etching-targeted region. The device comprises a planar PN-type device. Doping silicon carbide and etching silicon carbide devices in the etching-targeted regions to obtain doped regions comprises: performing N-type silicon carbide doping in the first etching-targeted region to obtain a first doped region; performing N-type silicon carbide doping in the second etching-targeted region to obtain a second doped region; and performing P-type silicon carbide doping in the third etching-targeted region to obtain a third doped region. Etching silicon carbide device structures in the etching-targeted regions; preparing metal electrodes on the doped regions comprises: preparing metal electrodes on the second and third doped regions.

Optionally, the etching-targeted regions comprise a first etching-targeted region, a second etching-targeted region, and a third etching-targeted region. The device comprises a trench PN-type device. Doping silicon carbide and etching silicon carbide devices in the etching-targeted regions to obtain doped regions comprises: performing N-type silicon carbide doping in the first etching-targeted region to obtain a first doped region; etching silicon carbide device structures in the etching-targeted regions; performing N-type silicon carbide doping in the second etching-targeted region to obtain a second doped region; and performing P-type silicon carbide doping in the third etching-targeted region to obtain a third doped region. Preparing metal electrodes on the doped regions comprises: preparing metal electrodes on the second and third doped regions.

Optionally, the etching-targeted regions comprise a first etching-targeted region, a second etching-targeted region, and a third etching-targeted region. The device comprises a trench NPN-type device. Doping silicon carbide and etching silicon carbide devices in the etching-targeted regions to obtain doped regions comprises: performing N-type silicon carbide doping in the first etching-targeted region to obtain a first doped region; etching silicon carbide device structures in the etching-targeted regions; performing N-type silicon carbide doping in the second etching-targeted region to obtain a second doped region; performing P-type silicon carbide doping in the third etching-targeted region to obtain a third doped region; and performing P-type silicon carbide doping in the third etching-targeted region again to obtain a fourth doped region, wherein the depth of the fourth doped region is less than that of the third doped region. Preparing metal electrodes on the doped regions comprises: preparing metal electrodes on the second and fourth doped regions.

In a second aspect, an embodiment of this application discloses a structure of a device, which comprises:
A composite substrate; the composite substrate comprises a third silicon carbide substrate and a silicon carbide epitaxial layer disposed on the third silicon carbide substrate; the side of the third silicon carbide substrate adjacent to the silicon carbide epitaxial layer has a dielectric layer; the silicon carbide epitaxial layer is obtained by epitaxial growth on a silicon carbide epitaxial substrate, where the silicon carbide epitaxial substrate is obtained through silicon carbide layer splitting and post-processing of a first bonded structure formed by bonding a first silicon carbide substrate and a second silicon carbide substrate; the composite substrate comprises an etching-targeted region; and
a modulation device structure disposed in the etching-targeted region.

The technical solution provided by the embodiment of this application offers the following technical effects.

By doping the silicon carbide epitaxial layer and fabricating a modulation device structure within the doped region, this application enables an efficient optical modulation solution for silicon carbide in integrated optical systems based on the mechanism of carrier dispersion. Additionally, by employing ion beam technology for the exfoliation and transfer of silicon carbide thin films, a silicon carbide epitaxial substrate meeting quality requirements can be obtained, thereby reducing device preparation costs.

### BRIEF DESCRIPTION OF THE DRAWINGS

In order to more clearly illustrate the technical solutions and advantages in the embodiments of this application or the existing technology, a brief introduction to the accompanying drawings required in the descriptions of the embodiments or the existing technology will be provided below. It is evident that the drawings described below are merely some embodiments of this application. For those skilled in the art, other accompanying drawings can also be obtained based on these drawings without the need for creative effort.
FIG. 1 is a schematic flowchart of a preparation method for a device provided in an embodiment of this application;
FIG. 2a is a schematic structural diagram of a first silicon carbide substrate 101 provided in an embodiment of this application;
FIG. 2b is a schematic structural diagram of a second silicon carbide substrate 102 provided in an embodiment of this application;
FIG. 2c is a schematic structural diagram of a third silicon carbide substrate 103 provided in an embodiment of this application;
FIG. 2d is a schematic structural diagram of a first bonding-ready structure 111 provided in an embodiment of this application;
FIG. 2e is a schematic structural diagram of a trimmed second silicon carbide substrate 112 provided in an embodiment of this application;
FIG. 2f is a schematic structural diagram of a first bonded structure 120 provided in an embodiment of this application;
FIG. 2g is a schematic structural diagram of a silicon carbide epitaxial substrate 200 provided in an embodiment of this application;
FIG. 2h is a schematic structural diagram of a second bonding-ready structure 210 provided in an embodiment of this application;
FIG. 2i is a schematic structural diagram of a second bonded structure 220 provided in an embodiment of this application;
FIG. 2j is a schematic structural diagram of a composite substrate 300 provided in an embodiment of this application;
FIG. 3a is a schematic structural diagram of an etching-targeted region provided in an embodiment of this application;
FIG. 3b is another schematic structural diagram of an etching-targeted region provided in an embodiment of this application;
FIG. 3c is a schematic structural diagram of a device provided in an embodiment of this application;
FIG. 4a is a schematic structural diagram of an etching-targeted region provided in an embodiment of this application;
FIG. 4b is another schematic structural diagram of an etching-targeted region provided in an embodiment of this application;
FIG. 4c is a schematic structural diagram of a device provided in an embodiment of this application;
FIG. 5a is a schematic structural diagram of an etching-targeted region provided in an embodiment of this application; and
FIG. 5b is a schematic structural diagram of a device provided in an embodiment of this application.

### Number reference:

101 - First silicon carbide substrate; 102 - Second silicon carbide substrate; 103 - Third silicon carbide substrate; 111 - First bonding-ready structure; 112 - Trimmed second silicon carbide substrate; 120 - First bonded structure; 200 - silicon carbide epitaxial substrate; 210 - Second bonding-ready structure; 2101 - silicon carbide epitaxial layer; 220 - Second bonded structure; 300 - Composite substrate; 301 - First doped region; 302 - Second doped region; 303 - Third doped region; 304 - Fourth doped region; 310 - Metal electrode; 320 - Device protective layer.

### DETAILED DESCRIPTION

The technical solutions in the embodiments of this application will be described clearly and completely below in conjunction with the accompanying drawings in the embodiments of this application. It is evident that the described embodiments are merely a part, rather than all, of the embodiments of this application. Based on the embodiments in this application, all other embodiments obtained by those of ordinary skill in the art without creative efforts shall fall within the protection scope of this application.

It should be noted that, as used in the specification of the embodiments of this application, the terms "an embodiment" or "embodiment" refer to specific features, structures, or characteristics that may be included in at least one embodiment of this application. It should be understood that in the specification, claims, and the aforementioned accompanying drawings of the embodiments of this application, terms indicating orientations or positional relationships such as "above," "below," "top," and "bottom" are based on the orientations or positional relationships shown in the drawings, solely for the convenience of describing this application and simplifying the description, rather than indicating or implying that the referenced devices or elements must have specific orientations or be constructed and operated in specific orientations. Therefore, they should not be construed as limitations on this application. The terms "first," "second," etc., are used solely for descriptive purposes and should not be construed as indicating or implying relative importance or implicitly specifying the number of technical features referenced. Consequently, features labeled with "first," "second," etc., may explicitly or implicitly comprise one or more of such features. Moreover, the terms "first," "second," etc., are used to distinguish similar objects and are not necessarily used to describe a specific order or sequence. It should be understood that data used in this manner can be interchanged as appropriate, so that the embodiments of this application described herein can be implemented in orders other than those illustrated or described here. Additionally, in the description of this embodiment, unless otherwise specified, the term "multiple" means two or more. Furthermore, the terms "comprise," "have," and any variations thereof are intended to cover non-exclusive inclusions. For example, a process, method, system, or product that comprises a series of steps or units is not necessarily limited to those steps or units clearly listed, but may comprise other steps or units that are not clearly listed or are inherent to these processes, methods, products, or devices.

In order to make the objectives, technical solutions, and advantages of the embodiments of this application clearer, further detailed descriptions of the embodiments are provided below in conjunction with the accompanying drawings and examples. It should be understood that the specific embodiments described herein are merely for the purpose of explaining the embodiments of this application and are not intended to limit them.

Silicon carbide material exists in more than 200 crystal forms. Among them, the most commonly used silicon carbide materials comprise 3C-SiC, 4H-SiC, and 6H-SiC. 3C-SiC thin films are primarily prepared through atmospheric pressure chemical vapor deposition (APCVD) and reduced pressure chemical vapor deposition (RPCVD) on the surface of Si substrates. The 3C-SiC thin films prepared in this manner are mainly polycrystalline, and their crystal quality does not reach that of single crystals. Furthermore, the growth temperatures of 4H-SiC and 6H-SiC are higher than the melting point of silicon, making it impossible to grow single-crystal silicon carbide thin films on Si substrates using traditional thin-film deposition and epitaxy methods. Growing single-crystal silicon carbide thin films on Si substrates requires a complex preparation process. Meanwhile, the epitaxial growth of silicon carbide thin films on silicon carbide substrates, without the isolation of an intermediate oxide layer, can degrade the performance of optical devices. Therefore, numerous difficulties exist in the growth of silicon carbide thin films for integrated optical applications.

In view of the above, the embodiments of this application provide a preparation method and a device structure. By doping the silicon carbide epitaxial layer and fabricating a modulation device structure within the doped region, an efficient optical modulation solution for silicon carbide in integrated optical systems can be achieved based on the mechanism of carrier dispersion. Additionally, by employing ion beam technology for the exfoliation and transfer of silicon carbide thin films, a silicon carbide epitaxial substrate that meets quality requirements can be obtained, thereby reducing the preparation costs of the device.

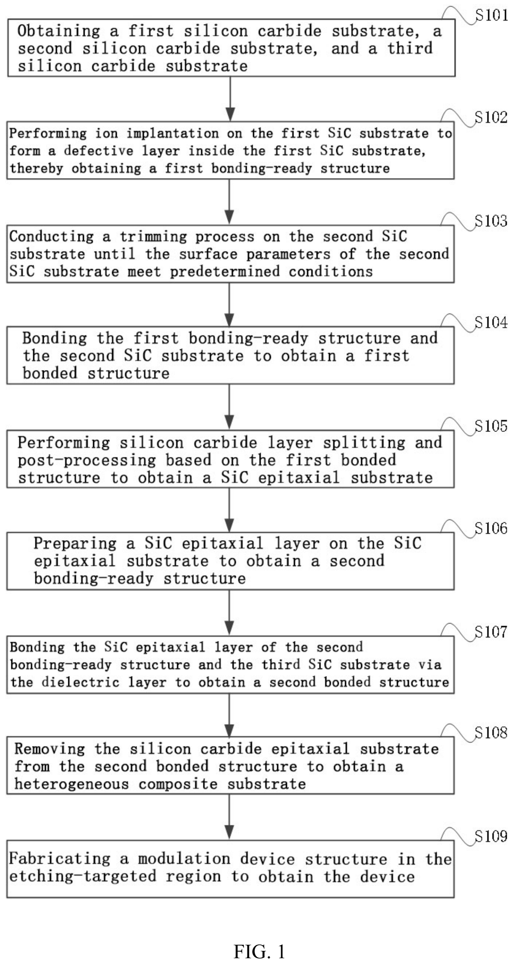

Please refer to FIG. 1, which is a schematic flowchart of a preparation method for a device provided in an embodiment of this application. As illustrated in FIG. 1, the preparation method comprises the following steps:
S101: obtaining a first silicon carbide substrate, a second silicon carbide substrate, and a third silicon carbide substrate,
wherein, in an optional embodiment, the first silicon carbide substrate may be an N-type silicon carbide substrate; the second silicon carbide substrate may be a low-cost silicon carbide substrate that, after undergoing a trimming process, can be used for bonding with the first silicon carbide substrate; and the third silicon carbide substrate may be an silicon carbide substrate with an oxide layer;
S102: performing ion implantation on the first silicon carbide substrate to form a defective layer inside the first silicon carbide substrate, thereby obtaining a first bonding-ready structure,
wherein, in the embodiment of this application, ion implantation can be performed on the first silicon carbide substrate to form a defective layer inside it, resulting in a first bonding-ready structure, wherein the first bonding-ready structure is intended for bonding with the second silicon carbide substrate,
optionally, the types of ions implanted into the first silicon carbide substrate comprise at least one of H and He. It should be noted that the embodiment of this application does not limit the types of implanted ions; in other optional embodiments, ions other than H and He may also be implanted, and multiple types of ions may be implanted simultaneously; for example, H ions and He ions may be implanted in a predetermined sequence; optionally, the implantation direction may be perpendicular to the surface of the first silicon carbide substrate; optionally, the implantation dose for ion implantation into the first silicon carbide substrate may be set within the range of 1E15 cm⁻² to 1E18 cm⁻², and the implantation energy may be set within the range of 20 keV to 2 MeV;
S103: performing a trimming process on the second silicon carbide substrate until its surface parameters meet predetermined conditions,
wherein, in the embodiment of this application, the second silicon carbide substrate can be a low-cost substrate with low flatness, wherein the trimming process can be performed on the second silicon carbide substrate until its surface parameters meet the predetermined conditions,
optionally, the second silicon carbide substrate can be at least one of a Dummy substrate, a mixed-polytype substrate, or a polycrystalline substrate,
optionally, the predetermined conditions may comprise: Total Thickness Variation (TTV) ≤ 1 µm; wherein tn an optional embodiment, the TTV value of the trimmed second silicon carbide substrate is less than that of the first silicon carbide substrate,
as an example, the trimming process on the second silicon carbide substrate may comprise: sequentially performing coarse grinding, fine grinding, coarse polishing, low-energy ion beam irradiation trimming, and fine polishing on the second silicon carbide substrate;
S104: bonding the first bonding-ready structure and the second silicon carbide substrate to obtain a first bonded structure,
wherein in the embodiment of this application, the first bonding-ready structure obtained after ion implantation into the first silicon carbide substrate can be wafer-bonded to the bonding surface of the second silicon carbide substrate without an intervening dielectric layer, resulting in a first bonded structure;
S105: performing silicon carbide exfoliation and post-processing based on the first bonded structure to obtain a silicon carbide epitaxial substrate,
wherein in the embodiment of this application, the silicon carbide thin film can be exfoliated and transferred from the first bonded structure; the resulting silicon carbide composite substrate structure is the silicon carbide epitaxial substrate; due to the weak photoelectric effect of silicon carbide, direct ion implantation into silicon carbide would lead to poor electrical quality, therefore, it is necessary to first grow a silicon carbide epitaxial substrate to obtain a homoepitaxial silicon carbide thin film with better electrical characteristics,
optionally, after exfoliating the silicon carbide thin film, chemical mechanical polishing can be used to treat the surface of the silicon carbide thin film, achieving a surface roughness ≤ 2 nm,
since the silicon carbide epitaxial substrate needs to serve as the basis for the epitaxial growth of silicon carbide layers, high-quality requirements are imposed on it; in industrial production, significant cost investment is usually required to obtain a high-quality silicon carbide epitaxial substrate; however, by adopting the method for fabricating a silicon carbide epitaxial substrate in the embodiment of this application, a low-cost bonding-ready substrate can be bonded to form a first bonded structure; after heat treatment and exfoliation of the silicon carbide thin film, a satisfactory silicon carbide epitaxial substrate can be obtained at a very low cost.
S106: preparing a silicon carbide epitaxial layer on the silicon carbide epitaxial substrate to obtain a second bonding-ready structure,
wherein in an optional embodiment, homoepitaxial growth can be performed on the silicon carbide epitaxial substrate to prepare the silicon carbide epitaxial layer, i.e., an n-region, resulting in a second bonding-ready structure,
optionally, the epitaxial methods comprise, but are not limited to, Physical Vapor Transport (PVT), solution methods, and High Temperature Chemical Vapor Deposition (HTCVD), among others; optionally, the thickness of the silicon carbide epitaxial layer ranges from 400 to 1500 nm, and the doping concentration of the silicon carbide epitaxial layer grown on the silicon carbide epitaxial substrate is set within the range of 1E13 to 1E15/cm³,
optionally, the doping type for the silicon carbide epitaxial layer can be either N-type doping or P-type doping; specifically, the doping elements for the top epitaxial layer of the silicon carbide epitaxial substrate can be at least one of N or P;
S107: bonding the silicon carbide epitaxial layer of the second bonding-ready structure to the third silicon carbide substrate based on a dielectric layer to obtain a second bonded structure,
wherein in the embodiment of this application, the third silicon carbide substrate is provided with a dielectric layer; the silicon carbide epitaxial layer of the second bonding-ready structure can be bonded to the third silicon carbide substrate based on this dielectric layer to obtain a second bonded structure,
optionally, the dielectric layer may comprise at least one of SiO₂ , Al₂O₃ , or Si₃N_{4;}. optionally, the preparation methods for the dielectric layer comprise at least one of thermal oxidation, Chemical Vapor Deposition (CVD), or Physical Vapor Deposition (PVD); optionally, the thickness of the dielectric layer ranges from 1 to 5 µm;
S108: removing the silicon carbide epitaxial substrate from the second bonded structure to obtain a composite substrate,
wherein in the embodiment of this application, the second bonded structure can undergo a thinning process to reduce the thickness of the top-layer silicon carbide epitaxial substrate until the top layer consists of the silicon carbide epitaxial layer, resulting in a composite substrate, wherein the top-layer silicon carbide epitaxial layer, serving as the region to be etched in the composite substrate, may have a thickness ranging from 500 to 1500 nm;
S109: preparing a modulation device structure in the region to be etched to obtain a device,
in step S109, a modulated device structure can be prepared in the region to be etched to obtain the device; as an example, preparing a modulated device structure in the region to be etched to obtain the device may comprise the following steps: performing silicon carbide doping and silicon carbide device etching processes in the region to be etched to obtain a doped region; subjecting the doped region to an annealing activation treatment; preparing metal electrodes on the doped region and covering it with a device protective layer to obtain the device; wherein, the doped region may comprise N+ and P+ regions.

In the embodiment of this application, the photonic device structures etched on the silicon carbide surface can comprise three types. Below, based on these three different photonic device structures, three specific embodiment methods for fabricating modulation device structures in the region to be etched are introduced separately.

### First Type:

In an optional embodiment, step S109 can involve etching a planar PN-type structure.

In this embodiment, the region to be etched comprises a first region to be etched, a second region to be etched, and a third region to be etched. The process of performing silicon carbide doping and etching processes in the region to be etched to obtain doped regions comprises the following steps.

### (1-1) N-type silicon carbide doping is performed in the first region to be etched to obtain a first doped region.

In this step, N-type silicon carbide doping can be performed in the first region to be etched to obtain an n+ region, i.e., the first doped region.

Optionally, the implanted ions may comprise at least one of N and P.

Optionally, the doping concentration range for N-type doping in the first region to be etched can be 1E15 to 1E17/cm³ .

Optionally, the length range of the first doped region can be 400 to 2000 nm.

Optionally, the doping implantation depth of the first doped region can be 500 to 1500 nm. It should be noted that the embodiment of this application does not limit the doping implantation depth of the first doped region. In other optional embodiments, the doping depth can also be in other numerical ranges less than the depth of the n-region.

### (1-2) N-type silicon carbide doping is performed in the second region to be etched to obtain a second doped region.

In this step, N-type silicon carbide doping can be performed in the second region to be etched to obtain an N+ region, i.e., the second doped region.

Optionally, the implanted ions may comprise at least one of N and P.

Optionally, the doping concentration range for N-type doping in the second region to be etched can be 1E17 to 1E19/cm³ .

Optionally, the length range of the second doped region can be 1 to 5000 nm.

Optionally, the doping implantation depth of the second doped region can be 10 to 400 nm.

### (1-3) P-type silicon carbide doping is performed in the third region to be etched to obtain a third doped region.

In this step, P-type silicon carbide doping can be performed in the third region to be etched to obtain a P+ region, i.e., the third doped region.

Optionally, the implanted ions may comprise at least one of B and Al.

Optionally, the doping concentration range for N-type doping (though it's P-type doping here, the range mentioned might be a typo and should refer to P-type doping concentration; however, following the original text) in the third region to be etched can be 1E17 to 1E19/cm³ (assuming this refers to the intended P-type doping concentration).

Optionally, the length range of the third doped region can be 1 to 5000 nm.

Optionally, the doping implantation depth of the third doped region can be 10 to 400 nm.

### (1-4) the silicon carbide device structure is etched in the region to be etched to obtain the doped regions.

In this step, the silicon carbide device structure can be etched in the region to be etched to obtain the doped regions.

Optionally, the structural processing of the silicon carbide device region in the region to be etched can be carried out using the following lithography and processing methods. The lithography methods may comprise at least one of electron beam lithography and deep ultraviolet lithography. The processing method can be dry etching, with an etching depth of 200 to 1300 nm. It should be noted that the etching depth does not exceed the doping implantation depth of the first doped region.

Optionally, the length of the region of the silicon carbide device structure can be 200 to 1000 nm.

After obtaining the doped regions including the silicon carbide device structure, an annealing activation process can be performed on the doped regions; metal electrodes can be prepared on the doped regions and covered with a device protective layer to obtain the device.

Optionally, when annealing to activate the doped regions, a vacuum or protective gas annealing environment can be adopted. The protective gas may comprise N₂, Ar, etc., with a pressure of 0.2-0.5 atmospheres. Optionally, the annealing temperature is 1500°C-1800°C, and the annealing duration is 0.5h-5h, with an inverse relationship between the annealing duration and temperature. Additionally, since silicon carbide exhibits sublimation at high temperatures, in order to avoid damaging the fabricated modulation device structure during annealing, a carbon film can be placed on the modulation device structure for protection before annealing. Optionally, the thickness of the carbon film is 100 nm-1000 nm, with an inverse relationship between the carbon film thickness and the annealing temperature and pressure. In this embodiment, preparing metal electrodes on the doped regions may comprise: preparing metal electrodes on the second and third doped regions, specifically, on the top layers of the N+ and P+ regions.

Optionally, the top-layer metal electrodes on the N+ and P+ regions can be made of at least one of Ni, Ni/Ti, or Ni/Au. Optionally, the thickness range of the metal electrodes can be 100 to 300 nm.

In the embodiment of this application, after the metal electrodes are prepared, an SiO₂ protective layer can be covered on the doped regions, where SiO₂ does not cover the metal regions. Optionally, the thickness of the SiO₂ protective layer is 500 to 2000 nm, which is thicker than the thickness of the device structure layer. The preparation method can be at least one of PECVD or PVD.

### Second Type:

In an optional embodiment, step S109 can involve etching a trench PN-type structure.

In this embodiment, the region to be etched comprises a first region to be etched, a second region to be etched, and a third region to be etched. The process of performing silicon carbide doping and etching processes in the region to be etched to obtain doped regions comprises the following steps:

### (2-1) N-type silicon carbide doping is performed in the first region to be etched to obtain a first doped region.

In this step, N-type silicon carbide doping can be performed in the first region to be etched to obtain an n+ region, i.e., the first doped region.

Optionally, the implanted ions may comprise at least one of N and P.

Optionally, the doping concentration range for N-type doping in the first region to be etched can be 1E15 to 1E17/cm³ .

Optionally, the length range of the first doped region can be 2.2 to 101µm.

Optionally, the doping implantation depth of the first doped region can be 500 to 1500 nm. It should be noted that the embodiment of this application does not limit the doping implantation depth of the first doped region. In other optional embodiments, the doping depth can also be in other numerical ranges less than the depth of the n-region.

### (2-2) the silicon carbide device structure is etched in the region to be etched .

In this step, the silicon carbide device structure can be etched in the region to be etched.

Optionally, the structural processing of the silicon carbide device region in the region to be etched can be carried out using the following lithography and processing methods. The lithography methods may comprise at least one of electron beam lithography or deep ultraviolet lithography. The processing method can be dry etching, with an etching depth of 200 to 1300 nm. It should be noted that the etching depth does not exceed the doping implantation depth of the first doped region.

### (2-3) N-type silicon carbide doping is performed in the second region to be etched to obtain a second doped region.

In this step, the second region to be etched can be a sub-region within the n+ region. N-type silicon carbide doping can be performed in the second region to be etched to obtain an N+ region, i.e., the second doped region.

Optionally, the implanted ions may comprise at least one of N and P.

Optionally, the doping concentration range for N-type doping in the second region to be etched can be 1E17 to 1E19/cm³.

Optionally, the length range of the second doped region can be 1 to 5000 nm.

Optionally, the doping implantation depth of the second doped region can be 10 to 400 nm.

### (2-4) P-type silicon carbide doping is performed in the third region to be etched to obtain a third doped region.

In this step, the third region to be etched can also be a sub-region within the n+ region (though it's intended for P-type doping). P-type silicon carbide doping can be performed in the third region to be etched to obtain a P+ region, i.e., the third doped region.

Optionally, the implanted ions may comprise at least one of B and Al.

Optionally, the doping concentration range for N-type doping (though it's P-type doping here, assuming a typo and referring to the intended P-type doping concentration for this step) in the third region to be etched can be 1E17 to 1E19/cm³.

Optionally, the length range of the third doped region can be 1 to 5000 nm.

Optionally, the doping implantation depth of the third doped region can be 10 to 400 nm.

After obtaining the doped regions including the silicon carbide device structure, an annealing activation process can be performed on the doped regions; metal electrodes can be prepared on the doped regions and covered with a device protective layer to obtain the device.

Optionally, when annealing to activate the doped regions, a vacuum or protective gas annealing environment can be adopted. The protective gas may comprise N₂, Ar, etc., with a pressure of 0.2-0.5 atmospheres. Optionally, the annealing temperature is 1500°C-1800°C, and the annealing duration is 0.5h-5h, with an inverse relationship between the annealing duration and temperature. Additionally, since silicon carbide exhibits sublimation at high temperatures, to avoid damaging the fabricated modulation device structure during annealing, a carbon film can be placed on the modulation device structure for protection before annealing. Optionally, the thickness of the carbon film is 100 nm-1000 nm, with an inverse relationship between the carbon film thickness and the annealing temperature and pressure. In this embodiment, preparing metal electrodes on the doped regions may comprise: preparing metal electrodes on the second and third doped regions, specifically, on the top layers of the N+ and P+ regions.

Optionally, the top-layer metal electrodes on the N+ and P+ regions can be made of at least one of Ni, Ni/Ti, or Ni/Au. Optionally, the thickness range of the metal electrodes can be 100 to 300 nm.

In the embodiment of this application, after the metal electrodes are prepared, an SiO₂ protective layer can be covered on the doped regions, where SiO₂ does not cover the metal regions. Optionally, the thickness of the SiO₂ protective layer is 500 to 2000 nm, which is thicker than the thickness of the device structure layer. The preparation method can be at least one of PECVD or PVD.

### Third Type:

In an optional embodiment, step S109 can involve etching a trench NPN-type structure.

In this embodiment, the region to be etched comprises a first region to be etched, a second region to be etched, and a third region to be etched. The process of performing silicon carbide doping and etching processes in the region to be etched to obtain doped regions comprises the following steps:

### (3-1) N-type silicon carbide doping is performed in the first region to be etched to obtain a first doped region.

In this step, N-type silicon carbide doping can be performed in the first region to be etched to obtain an n+ region, i.e., the first doped region.

Optionally, the implanted ions may comprise at least one of N and P.

Optionally, the doping concentration range for N-type doping in the first region to be etched can be 1E15 to 1E17/cm³.

Optionally, the length range of the first doped region can be 2.2 to 101µm.

Optionally, the doping implantation depth of the first doped region can be 500 to 1500 nm. It should be noted that the embodiment of this application does not limit the doping implantation depth of the first doped region. In other optional embodiments, the doping depth can also be in other numerical ranges less than the depth of the n-region.

### (3-2) Etch the silicon carbide device structure in the region to be etched.

In this step, the silicon carbide device structure can be etched in the region to be etched.

Optionally, the structural processing of the silicon carbide device region in the region to be etched can be carried out using the following lithography and processing methods. The lithography methods may comprise at least one of electron beam lithography or deep ultraviolet lithography. The processing method can be dry etching, with an etching depth of 200 to 1300 nm. It should be noted that the etching depth does not exceed the doping implantation depth of the first doped region.

### (3-3) N-type silicon carbide doping is performed in the second region to be etched to obtain a second doped region.

In this step, the second region to be etched can be a sub-region within the n+ region. N-type silicon carbide doping can be performed in the second region to be etched to obtain an N+ region, i.e., the second doped region.

Optionally, the implanted ions may comprise at least one of N and P.

Optionally, the doping concentration range for N-type doping in the second region to be etched can be 1E17 to 1E19/cm³.

Optionally, the length range of the second doped region can be 1 to 5000 nm.

Optionally, the doping implantation depth of the second doped region can be 10 to 400 nm.

### (3-4) P-type silicon carbide doping is performed in the third region to be etched to obtain a third doped region.

In this step, the third region to be etched can be a sub-region within the n+ region. P-type silicon carbide doping can be performed in the third region to be etched to obtain a P- region, i.e., the third doped region.

Optionally, the implanted ions may comprise at least one of B and Al.

Optionally, the doping concentration range for N-type doping (though it's P-type doping here, assuming a typo and referring to the intended P-type doping concentration for this step) in the third region to be etched can be 1E17 to 1E19/cm³.

Optionally, the length range of the third doped region can be 1 to 5000 nm.

Optionally, the doping implantation depth of the third doped region can be 100 to 400 nm.

### (3-5) Perform P-type silicon carbide doping in the third region to be etched (again, but for a different doped region) to obtain a fourth doped region.

In this step, the third region to be etched (or a different sub-region within it) can be used for P-type silicon carbide doping to obtain a P+ region, i.e., the fourth doped region.

Optionally, the depth of the fourth doped region is less than that of the third doped region.

Optionally, the implanted ions may comprise at least one of B and Al.

Optionally, the doping concentration range for N-type doping (again, assuming a typo and referring to the P-type doping concentration) in the third region to be etched (or the relevant sub-region) can be 1E17 to 1E19/cm³.

Optionally, the length range of the fourth doped region can be 1 to 5000 nm.

Optionally, the doping implantation depth of the fourth doped region can be 10 to 100 nm.

After obtaining the doped regions including the silicon carbide device structure, an annealing activation process can be performed on the doped regions; metal electrodes can be prepared on the doped regions and covered with a device protective layer to obtain the device.

Optionally, when annealing to activate the doped regions, a vacuum or protective gas annealing environment can be adopted. The protective gas may comprise N₂, Ar, etc., with a pressure of 0.2-0.5 atmospheres. Optionally, the annealing temperature is 1500°C-1800°C, and the annealing duration is 0.5h-5h, with an inverse relationship between the annealing duration and temperature. Additionally, since silicon carbide exhibits sublimation at high temperatures, to avoid damaging the fabricated modulation device structure during annealing, a carbon film can be placed on the modulation device structure for protection before annealing. Optionally, the thickness of the carbon film is 100 nm-1000 nm, with an inverse relationship between the carbon film thickness and the annealing temperature and pressure. In this embodiment, preparing metal electrodes on the doped regions may comprise: preparing metal electrodes on the second and fourth doped regions. Specifically, metal electrodes can be prepared on the top layers of the N+ and P+ regions.

Optionally, the top-layer metal electrodes on the N+ and P+ regions can be made of at least one of Ni, Ni/Ti, or Ni/Au. Optionally, the thickness range of the metal electrodes can be 100 to 300 nm.

In the embodiment of this application, after the metal electrodes are prepared, an SiO₂ protective layer can be covered on the doped regions, where SiO₂ does not cover the metal regions. Optionally, the thickness of the SiO₂ protective layer is 500 to 2000 nm, which is thicker than the thickness of the device structure layer. The preparation method can be at least one of PECVD or PVD.

In the embodiment of this application, since the composite substrate is a homogeneous silicon carbide composite substrate, the etching of the trench NPN-type structure can be achieved. If doping and device etching are performed on a silicon-based silicon carbide composite substrate, the realization of P+ and P- regions would be limited by the P-type doping process.

Through the device preparation method in the embodiment of this application, by doping the silicon carbide epitaxial layer and preparing the modulation device structure in the doped regions, an efficient optical modulation solution for silicon carbide in integrated optical systems can be achieved based on the mechanism of carrier dispersion. This groundbreaking application of the carrier dispersion mechanism in silicon carbide photonic devices addresses the modulation issues of silicon carbide in integrated optical systems. Additionally, by exfoliating and transferring the silicon carbide thin film using ion beam technology, a silicon carbide epitaxial substrate that meets quality requirements can be obtained, thereby reducing device preparation costs.

Based on the above introduction to a device preparation method, the following will further elaborate on the aforementioned preparation method with the aid of structural diagrams to facilitate understanding of the structural changes during the device preparation process. It should be understood that the following figures are merely illustrative examples. Based on the above description, those skilled in the art can obtain other figures without exerting creative effort. Additionally, the structural changes depicted in the following figures are merely feasible examples of the device preparation method and do not imply that the device preparation method described in the embodiments of this application is limited to the following examples.

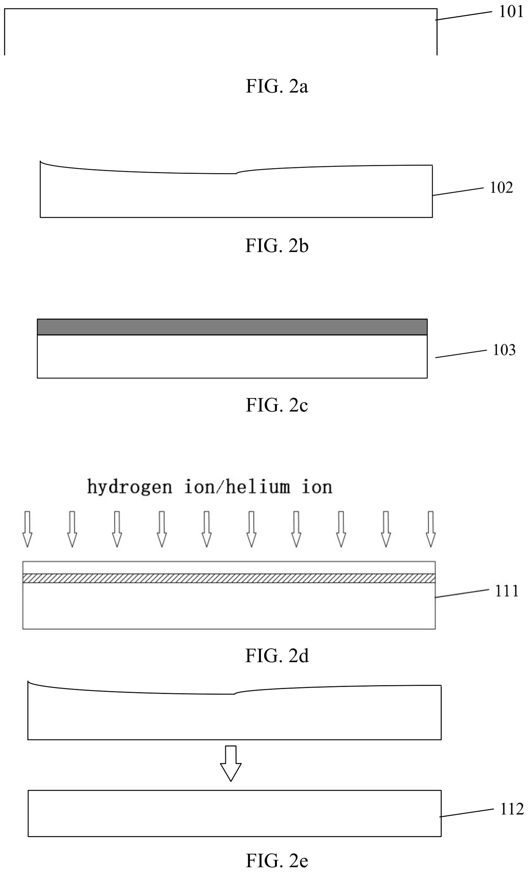

The following describes, with reference to Figures 2a-2j, the structural changes in the epitaxial substrate preparation method within a device preparation method provided in the embodiments of this application.

FIG. 2a is a schematic diagram of a first silicon carbide substrate 101 provided in an embodiment of this application.

In an optional embodiment, the first silicon carbide substrate 101 can be an N-type silicon carbide substrate.

FIG. 2b is a schematic diagram of a second silicon carbide substrate 102 provided in an embodiment of this application.

In an optional embodiment, the second silicon carbide substrate 102 can be a low-cost silicon carbide substrate. Optionally, the second silicon carbide substrate 102 can be at least one of a Dummy substrate, a mixed-crystalline substrate, or a polycrystalline substrate.

FIG. 2c is a schematic diagram of a third silicon carbide substrate 103 provided in an embodiment of this application.

In an optional embodiment, the third silicon carbide substrate 103 can be a silicon carbide substrate with an oxide layer. Optionally, the oxide layer can comprise at least one of SiO₂ , Al₂O₃ , or Si₃N₄ . Optionally, the preparation method of the oxide layer comprises at least one of thermal oxidation, CVD, or PVD. Optionally, the thickness range of the oxide layer is 1 to 5µm.

FIG. 2d is a schematic diagram of a first bonding-ready structure 111 provided in an embodiment of this application.

In an optional embodiment, ion implantation can be performed on the first silicon carbide substrate 101 to form a defect layer inside the first silicon carbide substrate 101, resulting in the first bonding-ready structure 111. Optionally, the types of ions implanted into the first silicon carbide substrate 101 comprise at least one of H and He. It should be noted that the embodiments of this application do not limit the types of implanted ions. In other optional embodiments, ions other than H and He can also be implanted, and multiple types of ions can be implanted, such as H ions and He ions implanted in a predetermined sequence. Optionally, the implantation direction can be perpendicular to the surface of the first silicon carbide substrate. Optionally, the set range of the implantation dose for ion implantation into the first silicon carbide substrate 101 is 1E15 cm⁻² to 1E18 cm⁻², and the set range of the implantation energy is 20 keV to 2 MeV.

FIG. 2e is a schematic diagram of a trimmed second silicon carbide substrate 112 provided in an embodiment of this application.

In an optional embodiment, a trimming process can be performed on the second silicon carbide substrate 102 until the surface parameters of the second silicon carbide substrate 102 meet predetermined conditions, resulting in the trimmed second silicon carbide substrate 112. Optionally, the predetermined conditions may comprise: Total Thickness Variation (TTV) ≤ 1µm. In an optional embodiment, the TTV value of the trimmed second silicon carbide substrate 112 is less than that of the first silicon carbide substrate. As an example, the trimming process performed on the second silicon carbide substrate 102 comprises: sequentially performing coarse grinding, fine grinding, coarse polishing, low-energy ion beam irradiation trimming, and fine polishing on the second silicon carbide substrate.

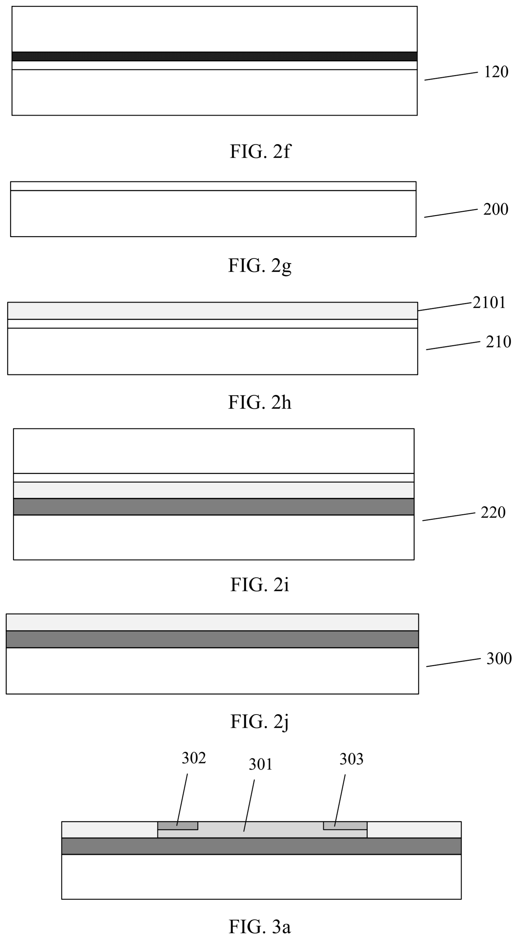

FIG. 2f is a schematic diagram of a first bonded structure 120 provided in an embodiment of this application.

In the embodiments of this application, the first bonding-ready structure 111 obtained after ion implantation into the first silicon carbide substrate 101 can be bonded to the bonding surface of the trimmed second silicon carbide substrate 112 through dielectric-free wafer bonding, resulting in the first bonded structure 120.

FIG. 2g is a schematic diagram of a silicon carbide epitaxial substrate 200 provided in an embodiment of this application.

In the embodiments of this application, silicon carbide thin film exfoliation and transfer can be performed on the first bonded structure. The resulting silicon carbide composite substrate structure obtained after the exfoliation and transfer is the silicon carbide epitaxial substrate 200. Optionally, after exfoliating the silicon carbide thin film, chemical mechanical polishing can be used to treat the surface of the silicon carbide thin film, achieving a surface roughness of ≤ 2 nm.

FIG. 2h is a schematic diagram of a second bonding-ready structure 210 provided in an embodiment of this application.

In an optional embodiment, a silicon carbide epitaxial layer 2101 ( i.e., an n⁻ region) can be epitaxially grown on the silicon carbide epitaxial substrate to form the second bonding-ready structure 210. Optionally, the epitaxial methods comprise, but are not limited to, Physical Vapor Transport (PVT), solution methods, and High Temperature Chemical Vapor Deposition (HTCVD). Optionally, the thickness range of the silicon carbide epitaxial layer 2101 is 400 to 1500 nm, and the doping concentration range for the silicon carbide epitaxial layer on the silicon carbide epitaxial substrate is set to be 1E13 to 1E15/cm³. Optionally, the doping type for the silicon carbide epitaxial layer 2101 can be N-type or P-type, with the specific doping element(s) being at least one of N or P in the top layer of the silicon carbide epitaxial substrate 200.

FIG. 2i is a schematic diagram of a second bonded structure 220 provided in an embodiment of this application.

In the embodiments of this application, the third silicon carbide substrate 103, which has a dielectric layer, can be bonded to the silicon carbide epitaxial layer 2101 of the second bonding-ready structure 210 based on the dielectric layer, resulting in the second bonded structure 220.

FIG. 2j is a schematic diagram of a composite substrate 300 provided in an embodiment of this application.

In the embodiments of this application, the second bonded structure 220 can be thinned to reduce the thickness of the silicon carbide epitaxial substrate 200 on the top layer until the top layer becomes the silicon carbide epitaxial layer 2101, resulting in the composite substrate 300. The top silicon carbide epitaxial layer 2101, serving as the etch-ready area in the composite substrate, may have a thickness range of 500 to 1500 nm. The thickness of the silicon carbide epitaxial layer 2101 on the silicon carbide epitaxial substrate, as the area to be etched in the composite substrate, can range from 500 to 1500 nm.

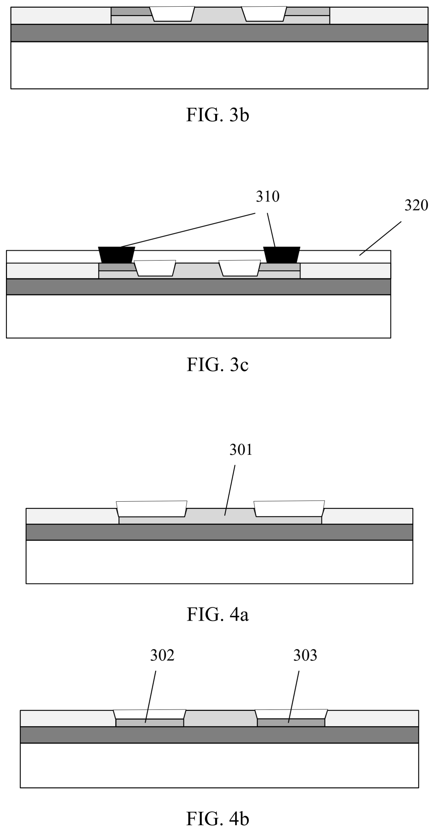

The following describes, with reference to Figures 3a-3c, the structural changes in the preparation method of the first type of photonic device provided in the embodiments of this application. In this embodiment, the device structure etched in the area to be etched may comprise a planar PN-type structure.

FIG. 3a is a schematic diagram of the structure of an area to be etched provided in an embodiment of this application.

In an optional embodiment, N-type silicon carbide doping can be performed in the first area to be etched to obtain an n⁺ region, namely, the first doped region 301. Optionally, the implanted ions may comprise at least one of N or P. Optionally, the doping concentration range for N-type doping in the first area to be etched can be 1E15 to 1E17/cm³. Optionally, the length range of the first doped region 301 can be 400 to 2000 nm. Optionally, the doping implantation depth of the first doped region 301 can be 500 to 1500 nm. It should be noted that the embodiments of this application do not limit the doping implantation depth of the first doped region 301. In other optional embodiments, the doping depth can also fall within other numerical ranges that are less than the depth of the n⁻ region.

In an optional embodiment, N-type silicon carbide doping can be performed in the second area to be etched to obtain an N⁺ region, namely, the second doped region 302. Optionally, the implanted ions may comprise at least one of N or P. Optionally, the doping concentration range for N-type doping in the second area to be etched can be 1E17 to 1E19/cm³. Optionally, the length range of the second doped region 302 can be 1 to 5000 nm. Optionally, the doping implantation depth of the second doped region 302 can be 10 to 400 nm.

In an optional embodiment, P-type silicon carbide doping can be performed in the third area to be etched to obtain a P⁺ region, namely, the third doped region 303. Optionally, the implanted ions may comprise at least one of B or Al. Optionally, the doping concentration range for P-type doping (Note: The original text mentioned "N-type doping" in the third area, which seems to be a typo and should be "P-type doping" based on the context) in the third area to be etched can be 1E17 to 1E19/cm³. Optionally, the length range of the third doped region 303 can be 1 to 5000 nm. Optionally, the doping implantation depth of the third doped region 303 can be 10 to 400 nm.

FIG. 3b is a schematic diagram of the structure of an area to be etched provided in an embodiment of this application.

In an optional embodiment, the silicon carbide device structure can be etched in the area to be etched to obtain doped regions. After obtaining the doped regions comprising the silicon carbide device structure, annealing activation treatment can be performed on the doped regions. Optionally, during the annealing activation of the doped regions, a vacuum or protective gas annealing environment can be adopted. The protective gas may comprise N₂, Ar, etc., and the pressure can be 0.2-0.5 atmospheres. Optionally, the annealing temperature is 1500°C-1800°C, and the annealing duration is 0.5h-5h, with an inverse relationship between the annealing duration and the annealing temperature. Additionally, since silicon carbide exhibits sublimation at high temperatures, to avoid damaging the fabricated modulated device structure during annealing, a carbon film can be placed on the modulated device structure for protection before annealing. Optionally, the thickness of the carbon film can be 100 nm-1000 nm, with an inverse relationship between the carbon film thickness and the annealing temperature and pressure.

FIG. 3c is a schematic diagram of a device structure provided in an embodiment of this application.

In an optional embodiment, metal electrodes 310 can be prepared on the second doped region 302 and the third doped region 303. Specifically, metal electrodes 310 can be prepared on the top layers of the N⁺ region and the P⁺ region. Optionally, the metal electrodes 310 on the top layers of the N⁺ region and the P⁺ region can be made of at least one of Ni, Ni/Ti, or Ni/Au. Optionally, the thickness range of the metal electrodes 310 can be 100 to 300 nm.

After the preparation of the metal electrodes 310 is completed, a device protective layer 320 can be applied over the doped regions. Optionally, the device protective layer 320 can be an SiO₂ protective layer, where the SiO₂ does not cover the metal regions. Optionally, the thickness of the SiO₂ protective layer can range from 500 to 2000 nm, exceeding the thickness of the device structure layer. The preparation method can be at least one of PECVD or PVD.

The following describes, with reference to Figures 4a-4c, the structural changes in the preparation method of the second type of photonic device provided in the embodiments of this application. In this embodiment, the device structure etched in the area to be etched may comprise a trench PN-type structure.

FIG. 4a is a schematic diagram of the structure of an area to be etched provided in an embodiment of this application.

In an optional embodiment, N-type silicon carbide doping can be performed in the first area to be etched to obtain an n⁺ region, namely, the first doped region 301. Optionally, the implanted ions may comprise at least one of N or P. Optionally, the doping concentration range for N-type doping in the first area to be etched can be 1E15 to 1E17/cm³. Optionally, the length range of the first doped region 301 can be 2.2 to 101 µm. Optionally, the doping implantation depth of the first doped region 301 can be 500 to 1500 nm. It should be noted that the embodiments of this application do not limit the doping implantation depth of the first doped region 301. In other optional embodiments, the doping depth can also fall within other numerical ranges that are less than the depth of the n⁻ region.

In an optional embodiment, the silicon carbide device structure can be etched in the first doped region 301 within the area to be etched. Optionally, structural processing of the silicon carbide device region within the area to be etched can be performed using the following lithography and processing methods. The lithography methods may comprise at least one of electron beam lithography or deep ultraviolet lithography. The processing method can be dry etching, with an etching depth ranging from 200 to 1300 nm. It should be noted that the etching depth does not exceed the doping implantation depth of the first doped region 301.

FIG. 4b is a schematic diagram of the structure of an area to be etched provided in an embodiment of this application.

In an optional embodiment, N-type silicon carbide doping can be performed in the second area to be etched to obtain an N⁺ region, namely, the second doped region 302. The second area to be etched can be a region within the first doped region 301. Optionally, the implanted ions may comprise at least one of N or P. Optionally, the doping concentration range for N-type doping in the second area to be etched can be 1E17 to 1E19/cm³. Optionally, the length range of the second doped region 302 can be 1 to 5000 nm. Optionally, the doping implantation depth of the second doped region 302 can be 10 to 400 nm.

In an optional embodiment, N-type silicon carbide doping can be performed in the third area to be etched to obtain a P⁺ region, namely, the third doped region 303. The third area to be etched can be a region within the first doped region 301. Optionally, the implanted ions may comprise at least one of B or Al. Optionally, the doping concentration range for what seems to be a typo (should likely be P-type doping, but mentioned as N-type in the original text; assuming it's P-type based on context) in the third area to be etched can be 1E17 to 1E19/cm³. Optionally, the length range of the third doped region 303 can be 1 to 5000 nm. Optionally, the doping implantation depth of the third doped region 303 can be 10 to 400 nm.

After obtaining the doped regions comprising the silicon carbide device structure, annealing activation treatment can be performed on the doped regions. Optionally, during the annealing activation of the doped regions, a vacuum or protective gas annealing environment can be adopted. The protective gas may comprise N₂, Ar, etc., and the pressure can be 0.2-0.5 atmospheres. Optionally, the annealing temperature is 1500°C-1800°C, and the annealing duration is 0.5h-5h, with an inverse relationship between the annealing duration and the annealing temperature. Additionally, since silicon carbide exhibits sublimation at high temperatures, to avoid damaging the fabricated modulated device structure during annealing, a carbon film can be placed on the modulated device structure for protection before annealing. Optionally, the thickness of the carbon film can be 100 nm-1000 nm, with an inverse relationship between the carbon film thickness and the annealing temperature and pressure.

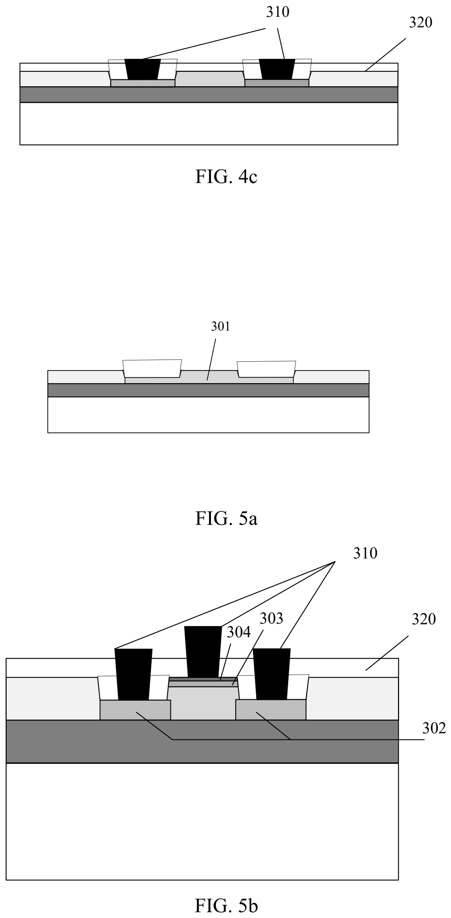

FIG. 4c is a schematic diagram of a device structure provided in an embodiment of this application.

In an optional embodiment, metal electrodes can be prepared on the second doped region 302 and the third doped region 303. Specifically, metal electrodes 310 can be prepared on the top layers of the N⁺ region and the P⁺ region. Optionally, the metal electrodes 310 on the top layers of the N⁺ region and the P⁺ region can be made of at least one of Ni, Ni/Ti, or Ni/Au. Optionally, the thickness range of the metal electrodes 310 can be 100 to 300 nm.

After the preparation of the metal electrodes 310 is completed, a device protective layer 320 can be applied over the doped regions. Optionally, the device protective layer 320 can be an SiO₂ protective layer, where the SiO₂ does not cover the metal regions. Optionally, the thickness of the SiO₂ protective layer can range from 500 to 2000 nm, exceeding the thickness of the device structure layer. The preparation method can be at least one of PECVD or PVD.

The following describes, with reference to Figures 5a-5b, the structural changes in the preparation method of the third type of photonic device provided in the embodiments of this application. In this embodiment, the device structure etched in the area to be etched may comprise a trench NPN-type structure.

FIG. 5a is a schematic diagram of the structure of an area to be etched provided in an embodiment of this application.

In an optional embodiment, N-type silicon carbide doping can be performed in the first area to be etched to obtain an n⁺ region, namely, the first doped region 301. Optionally, the implanted ions may comprise at least one of N or P. Optionally, the doping concentration range for N-type doping in the first area to be etched can be 1E15 to 1E17/cm³ . Optionally, the length range of the first doped region 301 can be 2.2 to 101µm. Optionally, the doping implantation depth of the first doped region 301 can be 500 to 1500 nm. It should be noted that the embodiments of this application do not limit the doping implantation depth of the first doped region 301. In other optional embodiments, the doping depth can also fall within other numerical ranges that are less than the depth of the n⁻ region.

In an optional embodiment, the silicon carbide device structure can be etched in the first doped region 301 within the area to be etched. Optionally, structural processing of the silicon carbide device region within the area to be etched can be performed using the following lithography and processing methods. The lithography methods may comprise at least one of electron beam lithography or deep ultraviolet lithography. The processing method can be dry etching, with an etching depth ranging from 200 to 1300 nm. It should be noted that the etching depth does not exceed the doping implantation depth of the first doped region.

FIG. 5b is a schematic diagram of a device structure provided in an embodiment of this application.

In an optional embodiment, N-type silicon carbide doping can be performed in the second area to be etched to obtain an N⁺ region, namely, the second doped region 302. The second area to be etched can be a region within the first doped region 301. Optionally, the implanted ions may comprise at least one of N or P. Optionally, the doping concentration range for N-type doping in the second area to be etched can be 1E17 to 1E19/cm³. Optionally, the length range of the second doped region 302 can be 1 to 5000 nm. Optionally, the doping implantation depth of the second doped region 302 can be 10 to 400 nm.

In an optional embodiment, N-type silicon carbide doping can be performed in the third area to be etched to obtain a P⁻ region, namely, the third doped region 303. The third area to be etched can be a region within the first doped region 301. Optionally, the implanted ions may comprise at least one of B or Al. Optionally, the doping concentration range for what seems to be a potential typo (should likely be P-type doping, but mentioned as N-type in the original text; assuming it's P-type based on context) in the third area to be etched can be 1E17 to 1E19/cm³. Optionally, the length range of the third doped region 303 can be 1 to 5000 nm. Optionally, the doping implantation depth of the third doped region 303 can be 100 to 400 nm.

In an optional embodiment, N-type silicon carbide doping can be performed in the third area to be etched to obtain a P⁺ region, namely, the fourth doped region 304. The third area to be etched can be a region within the first doped region 301. Optionally, the depth of the fourth doped region 304 is less than that of the third doped region. Optionally, the implanted ions may comprise at least one of B or Al. Optionally, the doping concentration range for what is presumably P-type doping (despite the original text mentioning N-type) in the third area to be etched can be 1E17 to 1E19/cm³. Optionally, the length range of the fourth doped region 304 can be 1 to 5000 nm. Optionally, the doping implantation depth of the fourth doped region 304 can be 10 to 100 nm.

After obtaining the doped regions comprising the silicon carbide device structure, annealing activation treatment can be performed on the doped regions. Optionally, during the annealing activation of the doped regions, a vacuum or protective gas annealing environment can be adopted. The protective gas may comprise N₂ , Ar, etc., and the pressure can be 0.2-0.5 atmospheres. Optionally, the annealing temperature is 1500°C-1800°C, and the annealing duration is 0.5h-5h, with an inverse relationship between the annealing duration and the annealing temperature. Additionally, to avoid damaging the fabricated modulated device structure during annealing due to the sublimation of silicon carbide at high temperatures, a carbon film can be placed on the modulated device structure for protection before annealing. Optionally, the thickness of the carbon film can be 100 nm-1000 nm, with an inverse relationship between the carbon film thickness and the annealing temperature and pressure.

After annealing activation treatment, metal electrodes 310 can be prepared on the second doped region 302 and the fourth doped region 304 to obtain the device. Specifically, metal electrodes 310 can be prepared on the top layers of the N⁺ region and the P⁺ region. Optionally, the metal electrodes 310 on the top layers of the N⁺ region and the P⁺ region can be made of at least one of Ni, Ni/Ti, or Ni/Au. Optionally, the thickness range of the metal electrodes 310 can be 100 to 300 nm.

After the preparation of the metal electrodes 310 is completed, a device protective layer 320 can be applied over the doped regions. Optionally, the device protective layer 320 can be an SiO₂ protective layer, where the SiO₂ does not cover the metal regions. Optionally, the thickness of the SiO₂ protective layer can range from 500 to 2000 nm, exceeding the thickness of the device structure layer. The preparation method can be at least one of PECVD or PVD.

The embodiments of this application also provide a device structure fabricated through the device preparation method described above. The device structure comprises:
A composite substrate; the composite substrate comprises a third silicon carbide substrate and a silicon carbide epitaxial layer disposed on the third silicon carbide substrate. The side of the third silicon carbide substrate adjacent to the silicon carbide epitaxial layer has a dielectric layer. The silicon carbide epitaxial layer is obtained by epitaxial growth on a silicon carbide epitaxial substrate, which is derived from a first bonded structure formed by bonding a first silicon carbide substrate and a second silicon carbide substrate, followed by silicon carbide layer splitting and post-processing. The composite substrate comprises an area to be etched.

A modulated device structure disposed in the area to be etched.

In an optional embodiment, the modulated device structure may comprise at least one of a planar PN-type structure, a trench PN-type structure, or a trench NPN-type structure. The structure of a device provided in the embodiments of this application can be referred to in Figures 3c, 4c, or 5b, as well as the descriptions of structural changes in the device preparation method provided in conjunction with these figures in the preceding text, and will not be elaborated on further here.

The device structure provided in the embodiments of this application enables an efficient optical modulation solution for silicon carbide in integrated optical systems based on the mechanism of carrier dispersion. Furthermore, compared to silicon-based silicon carbide carrier modulation devices, the device structure provided in this application, as a silicon carbide-based carrier modulation device, does not encounter the issue of doping activation temperatures exceeding the melting point of silicon during the preparation process, making the preparation process simpler and improving the ease of device structure preparation.

It should be noted that the order of the embodiments described above is merely for the purpose of description and does not imply any superiority or inferiority of the embodiments. Additionally, specific embodiments of this specification have been described. Other embodiments are within the scope of the appended claims. In some cases, the actions or steps recorded in the claims may be performed in a different order than in the embodiments and still achieve the desired results. Moreover, the processes depicted in the figures do not necessarily require a specific or sequential order to achieve the desired results. In certain embodiments, multitasking and parallel processing may also be feasible or advantageous.

Each embodiment in this specification is described in a progressive manner, with identical or similar parts among the embodiments referring to each other. Each embodiment focuses on highlighting the differences from other embodiments. In particular, for device embodiments, since they are basically similar to method embodiments, the descriptions are relatively simple, and relevant parts can be referred to in the descriptions of the method embodiments.

Those skilled in the art can understand that all or part of the steps in the above embodiments can be accomplished through hardware or by instructing relevant hardware with programs. The programs can be stored in a computer-readable storage medium. The storage medium mentioned above can be a read-only memory, a magnetic disk, an optical disc, or the like.

The above descriptions are merely preferred embodiments of this application and are not intended to limit this application. Any modifications, equivalent substitutions, improvements, etc., made within the spirit and principles of this application shall fall within the protection scope of this application.

## Claims

1. A preparation method for a device, comprising:
obtaining a first silicon carbide substrate, a second silicon carbide substrate, and a third silicon carbide substrate; the third silicon carbide substrate having a dielectric layer;
performing ion implantation on the first silicon carbide substrate to form a defective layer within the first silicon carbide substrate, thereby obtaining a first structure to be bonded;
conducting a trimming process on the second silicon carbide substrate until surface parameters of the second silicon carbide substrate meet predetermined conditions;
bonding the first structure to be bonded and the second silicon carbide substrate to obtain a first bonded structure;
performing silicon carbide layer splitting and post-processing based on the first bonded structure to obtain a silicon carbide epitaxial substrate;
preparing a silicon carbide epitaxial layer on the silicon carbide epitaxial substrate to obtain a second structure to be bonded;
bonding the silicon carbide epitaxial layer of the second structure to be bonded and the third silicon carbide substrate based on the dielectric layer to obtain a second bonded structure;
removing the silicon carbide epitaxial substrate from the second bonded structure to obtain a composite substrate; the composite substrate having an area to be etched; and
preparing a modulated device structure in the area to be etched to obtain the device.

2. The preparation method for a device according to claim 1, wherein the first silicon carbide substrate is an N-type silicon carbide substrate;
types of ions injected during ion implantation on the first silicon carbide substrate comprise at least one of H and He;
dosage range for ion implantation on the first silicon carbide substrate is set between 1E15 cm⁻² and 1E18 cm⁻²; and
energy range for ion implantation on the first silicon carbide substrate is set between 20 keV and 2 MeV.

3. The preparation method for a device according to claim 1, wherein, the second silicon carbide substrate is at least one of a dummy substrate, a mixed-polytype substrate, or a polycrystalline substrate;
the conducting the trimming process on the second silicon carbide substrate comprises:
successively performing coarse grinding, fine grinding, coarse polishing, low-energy ion beam irradiation trimming, and fine polishing on the second silicon carbide substrate.

4. The preparation method for a device according to claim 1, wherein, thickness range of the silicon carbide epitaxial layer is between 400 nm and 1500 nm;
doping concentration range for epitaxial growth of the silicon carbide epitaxial layer on the silicon carbide epitaxial substrate is set between 1E13/cm³ and 1E15/cm³;
doping elements for epitaxial growth of the silicon carbide epitaxial layer on the silicon carbide epitaxial substrate comprise at least one of N and P.

5. The preparation method for a device according to claim 1, wherein, the dielectric layer comprises at least one of SiO₂, Al₂O₃, or Si₃N₄;
the preparation method for the dielectric layer comprises at least one of thermal oxidation, CVD, or PVD;
the thickness range of the dielectric layer is between 1 µm and 5 µm.

6. The preparation method for a device according to claim 1, wherein the preparing the modulated device structure in the area to be etched to obtain the device comprises:
performing silicon carbide doping and etching of silicon carbide devices in the area to be etched to obtain a doped region;
conducting annealing activation treatment on the doped region; and
preparing metal electrodes on the doped region and covering the device with a protective layer to obtain the device.

7. The preparation method for a device according to claim 1, wherein, the area to be etched comprises a first area to be etched, a second area to be etched, and a third area to be etched; the device comprises a planar PN-type device;
the performing silicon carbide doping and etching of silicon carbide devices in the area to be etched to obtain the doped region comprises:
performing N-type silicon carbide doping in the first area to be etched to obtain a first doped region;
performing N-type silicon carbide doping in the second area to be etched to obtain a second doped region;
performing P-type silicon carbide doping in the third area to be etched to obtain a third doped region;
etching the silicon carbide device structure in the area to be etched;
the preparing the metal electrodes on the doped region comprises:
preparing the metal electrodes on the second doped region and the third doped region.

8. The preparation method for a device according to claim 1, wherein, the area to be etched comprises a first area to be etched, a second area to be etched, and a third area to be etched; the device comprises a trench PN-type device;
performing silicon carbide doping and etching of silicon carbide devices in the area to be etched to obtain the doped region comprises:
performing N-type silicon carbide doping in the first area to be etched to obtain a first doped region;
etching the silicon carbide device structure in the area to be etched;
performing N-type silicon carbide doping in the second area to be etched to obtain a second doped region;
performing P-type silicon carbide doping in the third area to be etched to obtain a third doped region;
the preparing the metal electrodes on the doped region comprises:
preparing the metal electrodes on the second doped region and the third doped region.

9. The preparation method for a device according to claim 1, wherein, the area to be etched comprises a first area to be etched, a second area to be etched, and a third area to be etched; the device comprises a trench NPN-type device;
performing silicon carbide doping and etching of silicon carbide devices in the area to be etched to obtain the doped region comprises:
performing N-type silicon carbide doping in the first area to be etched to obtain a first doped region;
etching the silicon carbide device structure in the area to be etched;
performing N-type silicon carbide doping in the second area to be etched to obtain a second doped region;
performing P-type silicon carbide doping in the third area to be etched to obtain a third doped region;
performing P-type silicon carbide doping in the third area to be etched again to obtain a fourth doped region; wherein depth of the fourth doped region being less than that of the third doped region;
the preparing the metal electrodes on the doped region comprises:
preparing the metal electrodes on the second doped region and the fourth doped region.

10. A device structure, comprising:
a composite substrate; the composite substrate comprises a third silicon carbide substrate and a silicon carbide epitaxial layer disposed on the third silicon carbide substrate; a side of the third silicon carbide substrate adjacent to the silicon carbide epitaxial layer having a dielectric layer; the silicon carbide epitaxial layer being obtained by epitaxial growth on a silicon carbide epitaxial substrate, which is derived from a first bonded structure formed by bonding a first silicon carbide substrate and a second silicon carbide substrate, followed by silicon carbide layer splitting and post-processing; the composite substrate including an area to be etched; and
a modulated device structure disposed in the area to be etched.
